# EUROPÄISCHE PATENTSCHRIFT

(11) **EP 3 328 340 B1**
(45) Veröffentlichungstag und Bekanntmachung des Hinweises auf die Patenterteilung: **25.09.2019**
(21) Anmeldenummer: 16745435.4
(22) Anmeldetag: 22.07.2016
(51) Int. Cl.: A61G 13/02, A61G 13/08, A61G 13/10, G01D 5/165, G01B 5/02

(54) **VORRICHTUNG ZUR POSITIONSERFASSUNG BEWEGLICHER OPERATIONSTISCH-KOMPONENTEN**
DEVICE FOR DETECTING THE POSITION OF MOVABLE OPERATING TABLE COMPONENTS
DISPOSITIF DE DÉTECTION DE LA POSITION DE COMPOSANTS MOBILES D'UNE TABLE D'OPÉRATION

(30) Priorität: 31.07.2015 DE 102015009990
(43) Veröffentlichungstag der Anmeldung: 06.06.2018
(73) Patentinhaber: Maquet GmbH, 76437 Rastatt (DE)
(72) Erfinder: HARLACHER, Peter, 77815 Bühl (DE); HADON, Stefanie, 76817 Karlsruhe (DE); BÖSKE, Winfried, 76135 Karlsruhe (DE)
(74) Vertreter: Zacco GmbH
(86) Internationale Anmeldenummer: PCT/EP2016/067489
(87) Internationale Veröffentlichungsnummer: WO 2017/021173

(56) Entgegenhaltungen:
- EP-A2- 0 284 787
- GB-A- 2 393 797
- US-A1- 2011 107 516

## Beschreibung

### Hintergrund der Erfindung

Die vorliegende Erfindung betrifft einen Operationstisch mit einer Vorrichtung zur Positionserfassung beweglicher Komponenten des Operationstisches.

Die Lagerfläche eines OP-Tisches lässt sich durch das Betätigen verschiedener Aktoren in ihrer Form und Position verändern um eine optimale Lagerungsposition für eine bestimmte Operation oder Behandlung des Patienten einzustellen. Bei OP-Tischen mit mehreren Gelenken erhöht sich mit jedem Verstellelement die Gefahr von Kollisionen einzelner OP-Tischbauteile miteinander. Siehe zum Beispiel US2011/107516 A1. Gefährdet sind vor allem die Komponenten Beinplatte, Rückenplatte, Tischsäule oder Tischfuß. Der Anwender kann durch Unachtsamkeit oder durch Fehlbedienung Tischteile beschädigen und dabei auch den gelagerten Patienten verletzen.

Um die Gefahr von Kollisionen zu vermindern, können Sensoren in den OP-Tisch eingebaut werden, die die Verstellbewegungen der Tischkomponenten erfassen und an eine elektronische Steuerung weitergeben. Diese Steuerung errechnet aus den Sensorwerten eine eventuell drohende Kollision oder eine falsche Einstellung und stoppt bei Kollisionsgefahr die Verstellbewegung um Schäden am Tisch oder Patienten zu vermeiden.

Für bestimmte Positionen können komplette Profile vorprogrammiert sein oder vom Anwender selbst erstellt werden, und dann mit einem einzigen Knopfdruck aufgerufen werden. Damit können Personal- und Gerätezeiten in erheblichem Umfang eingespart werden. Im Stand der Technik werden hierbei beispielsweise Seilzugpotentiometer verwendet, die es ermöglichen die Positionen der einzelnen verstellbaren Elemente zu erfassen. In der Regel werden sie für die vertikale und horizontale Tischposition verwendet. Zum Teil werden Seilzugsensoren aber auch zur (indirekten) Winkelerfassung eingesetzt, da Winkelsensoren aus Platzgründen an den Drehachsen oftmals nicht angebracht werden können. Die bekannten Seilzugsensoren sind jedoch fehleranfällig, da das meist offen verlaufende Seil verschmutzen kann und ungeschützt gegenüber mechanischen Einflüssen, wie z.B. Festklemmen, Einhaken oder Verziehen ist.

Die EP 284 787 A2 offenbart einen Positionsgeber mit einer Widerstandsbahn und einem längs dieser beweglichen Schieber.

Es ist eine Aufgabe der vorliegenden Erfindung, einen Operationstisch mit einer Vorrichtung bereitzustellen, mittels derer die Position von wenigstens einer beweglichen Komponente des Operationstisches zuverlässig erfasst werden kann.

### Überblick über die Erfindung

Diese Aufgabe wird durch einen Operationstisch gemäß Anspruch 1 gelöst.

Somit kann auf verschleissanfällige und schlecht zu desinfizierende Komponenten, wie beispielsweise Seile, verzichtet werden. Stattdessen werden eine glatte, gut zu reinigende Sensorfolie und ein ebenfalls gut desinfizierbarer Schleifer verwendet. Außerdem kann die Relativposition der ersten und zweiten Operationstisch-Komponenten präzise ermittelt werden, und das von der elektrischen Schaltung erzeugte Signal kann beispielsweise an ein Steuergerät ausgegeben werden, um die Bewegung der Operationstisch-Komponenten zu überwachen und zu steuern.

Gemäß einiger Ausführungsformen kann die elektrische Schaltung eine Potentiometerschaltung umfassen, so dass die Position des Druckstücks auf der Sensorfolie einen verstellbaren Spannungsabgriff darstellt. Durch eine derartige Spannungsteilung auf einer elektrisch leitfähigen Widerstandsbeschichtung lässt sich die Position des Druckstücks präzise ermitteln.

Gemäß einiger Ausführungsformen kann die mehrlagige Sensorfolie eine obere und eine untere Lage aufweisen, welche jeweils mit elektrisch leitfähigen Beschichtungen versehen sind, und wobei eine elastisch komprimierbare Zwischenlage zwischen der oberen und der unteren Lage angeordnet ist. Dadurch kann durch Zusammendrücken der Zwischenschicht ein elektrischer Kontakt zwischen den jeweiligen elektrisch leitfähigen Beschichtungen an der Position des Druckstücks erreicht werden, während an den Positionen, an denen das Druckstück nicht in Kontakt mit der Sensorfolie ist, durch die nicht komprimierte Zwischenschicht Fehlkontakte zwischen den jeweiligen Lagen verhindert werden.

Gemäß einiger Ausführungsformen kann ein Federmittel vorgesehen sein, um das Druckstück des Schleifers elastisch gegen die Sensorfolie zu drücken. Dadurch wird die Zwischenlage elastisch komprimiert und an der Position des Druckstückes werden die elektrisch leitfähigen Beschichtungen der oberen und unteren Lage miteinander in elektrischen Kontakt gebracht. Somit kann auf mechanisch einfache und robuste Art und Weise mittels Sensorfolie, Druckstück und Federstab ein Potentiometer realisiert werden.

Gemäß einiger Ausführungsformen kann der Schleifer ein Unterteil und ein Oberteil umfassen, welche jeweils an gegenüberliegenden Seite der Sensorfolie angeordnet sind, wobei das Oberteil auf dem Unterteil befestigt sein kann, und an gegenüberliegenden Seiten Durchlassöffnungen für die Sensorfolie aufweisen kann. Dadurch kann der Schleifer besonders einfach aufgebaut sein und einfach an der Sensorfolie befestigt werden, indem zunächst das Unterteil an einer Seite der Sensorfolie angeordnet wird, und schließlich das Oberteil von der anderen Seite der Sensorfolie aufgelegt und an dem Unterteil befestigt wird, wobei die Sensorfolie durch die Durchlassöffnungen im Oberteil verläuft.

Hierbei kann das Federmittel am Oberteil angebracht sein, wobei das Federmittel derart ausgebildet sein kann, dass es eine Kraft auf das Druckstück in Richtung auf das Unterteil ausübt. Somit kann die Sensorfolie durch das am Oberteil angebrachte Federmittel zwischen dem Druckstück und dem Unterteil komprimiert werden.

Gemäß einiger Ausführungsformen kann das Oberteil einen Rahmen umfassen. Dabei kann das Druckstück eine Zunge umfassen, welche einstückig mit dem Rahmen ausgebildet ist und welche innerhalb einer vom Rahmen umgebenen Öffnung liegt. Somit können Oberteil und Druckstück integral ausgebildet sein, so dass der Schleifer besonders einfach und kostengünstig hergestellt und montiert werden kann. Somit kann die Sensorfolie innerhalb des Rahmens des Oberteils zwischen dem Druckstück und dem Unterteil komprimiert werden, wodurch sich ein genau definierter Kontaktpunkt zwischen dem Druckstück und der im Rahmen des Schleifers gehaltenen Sensorfolie ergibt.

Gemäß einiger Ausführungsformen kann der Schleifer eine Gesamthöhe in einer Richtung senkrecht zu einer Ebene der Sensorfolie von weniger als 15 mm, bevorzugt von maximal 10,6 mm aufweisen. Die flache Bauweise ermöglicht den Einsatz der Vorrichtung auch in engen Bauräumen.

Gemäß einiger Ausführungsformen kann die Vorrichtung ferner ein hydraulisches Verstellelement zum Verstellen der zweiten Operationstisch-Komponente gegenüber der ersten Operationstisch-Komponente umfassen, wobei die Sensorfolie an einem ersten Bauteil des hydraulischen Verstellelements angebracht ist und wobei der Schleifer an einem zweiten Bauteil des hydraulischen Verstellelements angebracht ist. Dadurch kann die voranstehend beschriebene Vorrichtung mit einem Hydraulikzylinder-Mechanismus zur Verstellung von Operationstisch-Komponenten kombiniert werden, wobei beispielsweise die Sensorfolie an einem Hydraulikzylinder angebracht sein kann und der Schleifer an einer Kolbenstange des Hydraulikyzlinders, oder umgekehrt. Anstelle eines hydraulischen Verstellelements können auch elektrische, pneumatische oder mechanische Verstellelemente vorgesehen sein, wobei die Vorrichtung zur Positionserfassung dann jeweils an entsprechenden Bauteilen des elektrischen, pneumatischen bzw. mechanischen Verstellelements angebracht sein kann.

Bei den Komponenten der Lagerfläche kann es sich beispielsweise um eine Rückenplatte, eine Kopfplatte, Beinplatten oder um andere Abschnitte einer Patienten-Lagerfläche handeln.

Gemäß einiger Ausführungsformen kann der Operationstisch ferner ein Steuergerät zum Steuern der Bewegung der wenigstens einen zweiten Komponente relativ zur ersten Komponente umfassen. Hierbei kann vorgesehen sein, dass die Vorrichtung zur Positionserfassung ein Positionssignal an das Steuergerät ausgibt. Das Positionssignal kann dabei beispielsweise ein Spannungssignal oder eine Mehrzahl von Spannungssignalen sein, aus welchen das Steuergerät eine Relativposition der beiden Komponenten des Operationstischs ermitteln kann. Das Steuergerät kann somit die Relativposition der beiden Komponenten überwachen und steuern, und somit sowohl eine Kollisionskontrolle der Operationstisch-Komponenten miteinander und mit anderen Strukturen, als auch ein Anfahren von abgespeicherten Positionen der Operationstisch-Komponenten realisieren.

### Kurze Beschreibung der Zeichnungen

Beispielhafte Ausführungsformen der vorliegenden Erfindung werden nachstehend unter Bezugnahme auf die angehängten Zeichnungen beschrieben, in welchen gleiche Bezugszeichen jeweils gleiche oder einander entsprechende Elemente bezeichnen.
Fig. 1 zeigt eine schematische Ansicht eines Operationstisches mit beweglichen Komponenten.
Fig. 2 zeigt eine Ansicht einer ersten Ausführungsform einer erfindungsgemäßen Vorrichtung;
Fig. 3 zeigt ein Schaltschema und eine Detailansicht der in Fig. 2 dargestellten Vorrichtung.
Fig. 3a zeigt eine Detailansicht der in Fig. 3 dargestellten Vorrichtung.
Fig. 4 zeigt eine Ansicht des Schleifers der in Fig. 2 dargestellten Vorrichtung.
Fig. 5 zeigt einen Querschnitt eines Schleifers gemäß einer Ausführungsform der erfindungsgemäßen Vorrichtung.
Fig. 6 zeigt ein Beispiel für einen Einsatz einer Ausführungsform der erfindungsgemäßen Vorrichtung.

### Detaillierte Beschreibung

In der folgenden Beschreibung werden unter Bezugnahme auf die Zeichnungen beispielhafte Ausführungsformen der vorliegenden Erfindung beschrieben. Die Zeichnungen sind dabei nicht notwendigerweise maßstabsgetreu, sondern sollen die jeweiligen Merkmale lediglich schematisch illustrieren. Dabei ist zu beachten, dass die nachstehend beschriebenen Merkmale und Komponenten jeweils miteinander kombiniert werden können, unabhängig davon, ob sie in Zusammenhang mit einer einzigen Ausführungsform beschrieben worden sind. Die Kombination von Merkmalen in den jeweiligen Ausführungsformen dient lediglich der Veranschaulichung des grundsätzlichen Aufbaus und der Funktionsweise der beanspruchten Vorrichtung.

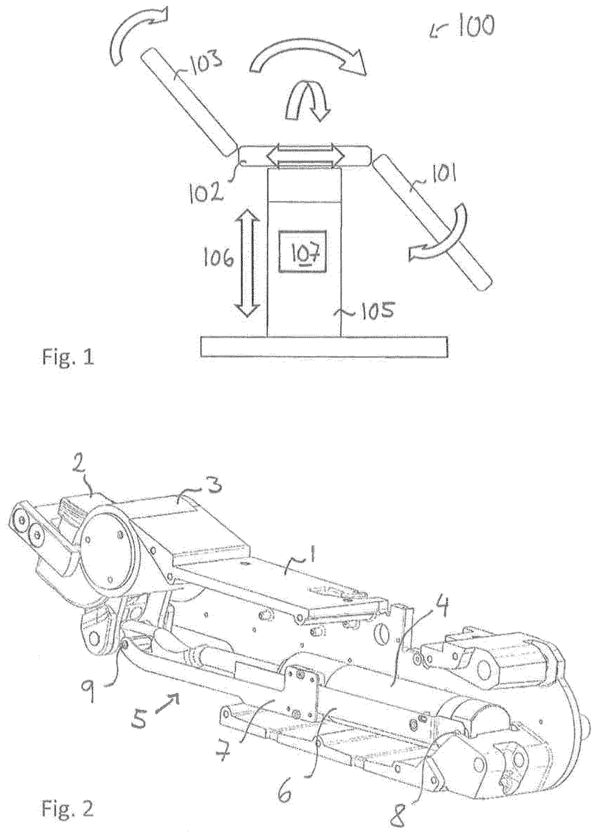

Fig. 1 zeigt eine schematische Ansicht eines Operationstisches 100, welcher modular aufgebaut ist und mehrere bewegliche Komponenten umfasst. Beispielsweise kann eine Operations-Lagerfläche des Operationstisches 100 mehrfach unterteilt sein, in eine oder mehrere Beinplatten 101, eine oder mehrere Hüftplatten 102 und eine oder mehrere Rückenplatten 103. Gemäß weiterer Ausführungsformen können zusätzlich eine oder mehrere Kopfplatten und/oder weitere Komponenten vorgesehen sein. Diese Komponenten 101-103 können jeweils relativ zueinander und relativ zu einem Fuß 105 des Operationstisches 100 bewegbar sein. Der Fuß 105 kann eine Hubmechanik 106 zur Einstellung der Höhe des Operationstisches 100 umfassen.

Wie schematisch in Fig. 1 durch die jeweiligen Pfeile gezeigt, können bei den Komponenten 101-103 jeweils eine Mehrzahl von unterschiedlichen Bewegungsachsen vorgesehen sein, um beispielsweise die Neigung oder Kantung einzelner Komponenten zueinander und/oder zum Fuß 105 einzustellen, und um mehrere Winkelfunktionen z.B. für Kopf, Rumpf und Beine einzustellen. Weiterhin kann vorgesehen sein, dass die Komponenten 101-103 relativ zum Fuß 105 in Längsrichtung des Operationstisches verschiebbar sind.

Hierbei können die Bewegungen für Hub, Längsverschiebung, und/oder Anwinkeln der Rückenplatte 103 und/oder der Beinplatten 101 motorisch erzeugt werden, wobei hydraulische oder elektrische Systeme verwendet werden können. Ein Steuergerät 107 kann im Fuß 105 untergebracht sein, um die Bewegung der Komponenten 101-103 zu steuern. Um die Stellungen und Positionen der einzelnen bewegten Komponenten zu erfassen und auszuwerten, werden gemäß einiger Ausführungsformen Sensoren und Vorrichtungen wie nachstehend beschrieben eingesetzt.

Fig. 2 zeigt eine Vorrichtung, mit der die Relativbewegung zweier Komponenten 1 und 2, welche über ein Gelenk 3 miteinander verbunden sind, erzeugt und gemessen werden kann. Bei den in Fig. 2 dargestellten Komponenten 1 und 2 kann es sich um ein beliebiges Paar der Komponenten 101-103 des in Fig. 1 gezeigten Operationstisches oder eines anderen Operationstisches handeln. Bei der in Fig. 2 gezeigten Ausführungsform wird ein Hydraulikzylinder 4 als Antriebselement der Verstellbewegung verwendet. Es ist jedoch auch denkbar, einen elektrischen, pneumatischen oder mechanischen Antrieb vorzusehen.

Die durch den Hydraulikzylinder 4 erzeugte Verstellbewegung wird mit Hilfe eines Foliensensors 5 ermittelt. Der Foliensensor 5 umfasst eine Sensorfolie 6 und einen Schleifer 7. Bei der gezeigten Ausführungsform ist die Sensorfolie 6 an einer ersten Befestigungsposition 8 mit der Kolbenseite des Hydraulikzylinders 4 verbunden und der Schleifer 7 ist an einer zweiten Befestigungsposition 9 an der Stangenseite des Hydraulikzylinders 4 angebracht. Fährt der Hydraulikzylinder 4 ein oder aus, bewegen sich die beiden Sensorteile 6, 7 gegeneinander.

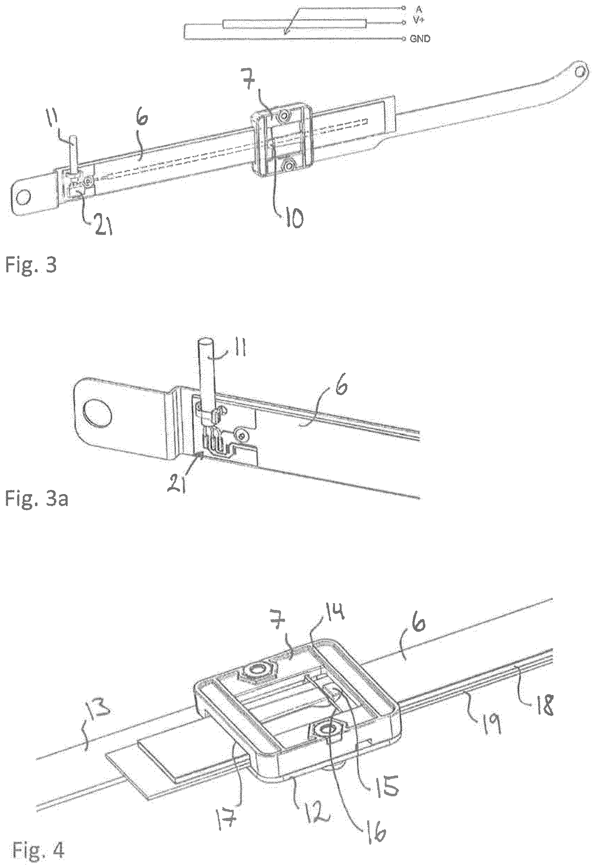

Der Foliensensor 5 funktioniert dabei nach dem Prinzip eines Folienpotentiometers, wie in dem oben in Fig. 3 abgebildeten Schaltschema dargestellt: auf der mehrlagigen Sensorfolie 6 ist jeweils auf einer oberen und einer unteren Lage eine Leiterbahn aufgedruckt, wobei eine elastisch komprimierbare Zwischenschicht zwischen den beiden Leiterbahnen angeordnet ist. Am Kontaktpunkt 10 des Schleifers 7 wird ein Spannungssignal abgenommen und über eine dreiadrige Signalleitung 11 beispielsweise dem Steuergerät 107 des Operationstisches 100 (siehe Fig. 1) zugeführt. Unter einer Abdeckung sind dabei in einem Anschlussbereich 21 Lötanschlüsse der Kabel sowie der Widerstände zur Leitungsüberwachung angeordnet, siehe auch Fig. 3a. Wie aus dem Schaltschema von Fig. 3 ersichtlich, werden dabei die Anschlüsse A, V+ und GND jeweils mit einer Ader des dreiadrigen Signalkabels 11 verbunden. Das Spannungssignal A ändert entlang dem Verfahrweg des Schleifers 7 seinen Wert stetig. Mit diesem Ausgangswert kann die aktuelle, ausgefahrene Länge des Hydraulikzylinders 4 (siehe Fig. 2) berechnet werden, mit der wiederum der Verstellwinkel der entsprechenden OP-Tisch-Komponenten 101-103 ermittelt werden kann.

Bei der vorliegenden Ausführungsform wird das Spannungssignal über eine dreiadrige Signalleitung 11 zum Steuergerät 107 geführt. Der Anschluss der Signalleitung 11 auf dem Foliensensor 5 kann hierbei nahe am Drehpunkt bzw. Befestigungspunkt 8 der Sensorfolie 6 am Hydraulikzylinder 4 angeordnet sein. Dadurch sind die Längenänderungen der Leitung 11 durch das Bewegen der Gelenke sehr klein und die Leitungsführung kann platzsparend ausgeführt sein.

Die Steuerung kann als ein Steuergerät realisiert sein, welches beispielsweise im Fuß 105 des Operationstisches 100 angeordnet sein kann. Mit Hilfe der über die entsprechenden Signalleitungen 11 zugeführten Positionssignale kann das Steuergerät eine Kollisionskontrolle der Komponenten 101-103 des Operationstisches durchführen oder kann das Verfahren der Komponenten 101-103 in vorher abgespeicherte Positionen steuern, um den Patienten für bestimmte Operationen und Behandlungen in eine jeweils gewünschte Lagerungsposition zu bringen.

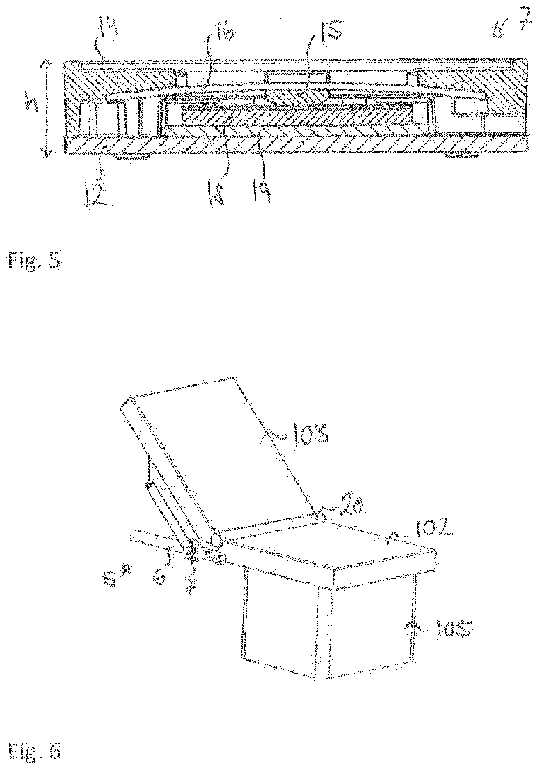

Fig. 4 und 5 zeigen eine Ausführungsform des Schleifers 7. Der Schleifer 7 umfasst ein Unterteil 12, welches einstückig mit einem Arm 13 ausgebildet sein kann, welcher sich vom Unterteil 12 bis zu der Befestigungsposition 9 (siehe Fig. 2) des Schleifers 7 erstreckt. Auf dem Unterteil 12 ist ein Oberteil 14 befestigt, welches bei der gezeigten Ausführungsform als ein Rahmen ausgeführt ist. Innerhalb dieses Rahmens 14 ist ein Druckstück 15 angeordnet, welches einstückig mit dem Rahmen 14 ausgebildet sein kann. Bei der in Fig. 4 und 5 gezeigten Ausführungsform ist das Druckstück 15 als eine Zunge ausgebildet, welche an einer Seite mit dem Rahmen 14 verbunden ist und bis in die Mitte des Rahmens 14 ragt. Ein Federstab 16 ist am Rahmen befestigt, um das Druckstück 15 in Richtung des Unterteils 12 zu drücken. In gegenüberliegenden Seitenwänden des Rahmens 14 sind Aussparungen 17 vorgesehen, welche Durchlassöffnungen für die Sensorfolie 6 zwischen dem Oberteil 14 und Unterteil 12 des Schleifers 7 bilden.

Fig. 4 zeigt ebenfalls den Aufbau der Sensorfolie 6 mit einer oberen Lage 18 und einer unteren Lage 19. Wie in dem oben in Fig. 3 gezeigten Schaltschema ersichtlich ist, umfasst die obere Lage 18 eine elektrische Leiterbahn A, welche durch das Druckstück 15 in Kontakt mit einem Widerstandsmaterial auf der unteren Lage 19 gebracht wird, das, wie im Schaltschema in Fig. 3 gezeigt, mit einer Spannung V+ beaufschlagt ist. Damit wird durch die Sensorfolie 6 und das Druckstück 15 eine robuste Potentiometeranordnung realisiert, welche unempfindlich gegenüber Staub und Schmutz ist, und bei welcher die jeweiligen elektrischen Leiterbahnen und Widerstandsmaterialien gegen Abrieb und Verschleiß geschützt sind, da sie nicht in direktem Kontakt mit der Umgebung oder mit beweglichen Elementen stehen. Stattdessen bewegen sich das beispielsweise aus einem Kunststoffmaterial hergestellte Druckstück 15 und das Unterteil 12 des Schleifers 7 auf den jeweiligen Rückseiten der mit elektrisch leitfähigen Beschichtungen versehenen Lagen 18, 19 der Sensorfolie 6.

Wie in der Querschnittsansicht von Fig. 5 gezeigt, stützt sich der Federdraht 16 bei dieser Ausführungsform an seinen beiden Enden jeweils in Ausnehmungen im Rahmen 14 ab und ist dann derart über das Druckstück 15 gespannt, dass der nötige Anpressdruck des Druckstücks 15 auf die Sensorfolie 6 erzeugt wird. Der Schleifer 7 gemäß der gezeigten Ausführungsform ist dabei ein flach aufbauendes Kunststoffteil, das durch einen quer eingelegten Federstab 12 den nötigen Anpressdruck erzeugt. Die Höhe h liegt bei der gezeigten Ausführungsform unter 10,6 mm, so dass der Schleifer 7 auch in engen Bauräumen eingesetzt werden kann.

Wie in Fig. 6 gezeigt ist, kann gemäß einiger Ausführungsformen auch bei axial angeordneten Aktuatoren 20 eine Vorrichtung zur Positionserfassung mit einem Foliensensor 5, wie voranstehend beschreiben, verwendet werden. In dem in Fig. 6 gezeigten Beispiel ist die Rückenplatte 103 durch einen axial angeordneten Aktuator 20 gegenüber der Hüftplatte 102 verstellbar. Es ist allerdings auch denkbar, axial angeordnete Aktuatoren an anderen Positionen und zwischen anderen Komponenten des Operationstisches anzuordnen.

Hierbei kann beispielsweise ein elektrischer, hydraulischer oder pneumatischer Antrieb im oder am Aktuator 20 vorgesehen sein, oder es kann vorgesehen sein, dass bei der in Fig. 6 gezeigten Ausführungsform die Rückenplatte 103 manuell relativ zur Hüftplatte verstellt werden kann. Durch den Foliensensor 5 kann auch bei einer manuellen Verstellung die Position der Rückenplatte 103 schnell und präzise erfasst werden. Auf Grundlage der erfassten Position kann beispielsweise ein Benutzer mittels akustischer oder optischer Signale darauf hingewiesen werden, wenn eine vorbestimmte Position der Rückenplatte 103 erreicht ist, oder der Benutzer kann vor einer drohenden Kollision gewarnt werden.

Bei der in Fig. 6 gezeigten Ausführungsform ist der Schleifer 7 drehbar montiert, damit er die Sensorfolie 6 befahren kann. Dies kann beispielsweise durch eine drehbare Verbindung zwischen dem Unterteil 12 und dem Arm 13 des Schleifers 7 realisiert werden (siehe Fig. 4). Die Signalwerte, die durch die Signalleitung 11 ausgegeben werden, sind bei dieser Ausführungsform abhängig von der Winkelstellung der Elemente.

Mit der voranstehend beschriebenen Vorrichtung zur Positionserfassung ist eine präzise Bestimmung der Relativposition zweier gegeneinander verstellbarer Komponenten möglich, beispielsweise bei einem Operationstisch mit verstellbaren Rücken-, Bein-, Kopf- und Hüftplatten. Die Verwendung von Foliensensoren erhöht dabei die Zuverlässigkeit der Baugruppe Wegaufnahme erheblich. Die gebräuchlichen Seilzugpotentiometer sind sehr viel anfälliger. Das meist offen liegende Seil kann verschmutzen und kann Partikel in das Potentiometergehäuse einschleppen. Die Foliensensoren dagegen sind unempfindlich gegen Staub, kleine Partikeln, Feuchtigkeit und Öl.

Die flache Bauform des Schleifers ermöglicht den Einsatz auch in engen Bauräumen. Durch den einfachen Aufbau des Schleifers ist dieser kostengünstig herzustellen und einfach zu montieren. Alle Komponenten des Schleifers sind für eine Reinigung und Desinfektion einfach zugänglich.

Die elektrisch leitfähigen Beschichtungen und Materialien sind bei der Vorrichtung zur Positionserfassung gegenüber mechanischen Einflüssen weitgehend geschützt, so dass Abrieb und Verschleiß gegenüber bekannten Seilzugpotentiometern verringert sind. Als bewegliche Teile umfasst die Vorrichtung zur Positionserfassung eine einfache Gleitführung des Schleifers auf der Sensorfolie, wobei keine Rückstellelemente benötigt werden. Somit hat die voranstehend beschrieben Vorrichtung einen besonders einfachen Aufbau, ist daher kostengünstig herstellbar und hat eine geringe Veschleißanfälligkeit.

## Patentansprüche

1. Operationstisch (100), umfassend:
eine Lagerfläche mit einer ersten Komponente (1) und wenigstens einer zweiten Komponente (2), welche relativ zur ersten Komponente (1) beweglich ist,
wenigstens ein hydraulisches Verstellelement (4) zum Bewegen der zweiten relativ zur ersten Komponente, und
wenigstens eine Vorrichtung (5) zur Positionserfassung, welche ausgelegt ist, um die Position der zweiten relativ zur ersten Komponente zu ermitteln,
wobei die Vorrichtung folgendes umfasst:
eine mehrlagige Sensorfolie (6);
einen Schleifer (7), welcher ein Druckstück (15) aufweist, welches die mehrlagige Sensorfolie (6) elastisch komprimiert; und
eine elektrische Schaltung , welche in Abhängigkeit der Position des Druckstücks (15) auf der Sensorfolie (6) ein Signal erzeugt.

2. Operationstisch (100) nach Anspruch 1, wobei die elektrische Schaltung eine Potentiometerschaltung umfasst.

3. Operationstisch (100) nach Anspruch 1 oder 2, wobei die mehrlagige Sensorfolie (6) eine obere und eine untere Lage (18, 19) aufweist, welche jeweils mit elektrisch leitfähigen Beschichtungen versehen sind, und wobei eine elastisch komprimierbare Zwischenlage zwischen der oberen und der unteren Lage (18, 19) angeordnet ist.

4. Operationstisch (100) nach Anspruch 3, wobei ein Federmittel (16) vorgesehen ist, um das Druckstück (15) des Schleifers (7) elastisch gegen die Sensorfolie (6) zu drücken, wodurch die Zwischenlage elastisch komprimiert wird und an der Position des Druckstücks (15) die elektrisch leitfähigen Beschichtungen der oberen und unteren Lage (18, 19) miteinander in elektrischen Kontakt gebracht werden.

5. Operationstisch (100) nach Anspruch 4, wobei der Schleifer (7) ein Unterteil (12) und ein Oberteil (14) umfasst, welche jeweils an gegenüberliegenden Seite der Sensorfolie (6) angeordnet sind,
wobei das Oberteil (14) an dem Unterteil (12) befestigt ist, und an gegenüberliegenden Seiten Durchlassöffnungen (17) für die Sensorfolie (6) aufweist.

6. Operationstisch (100) nach Anspruch 5, wobei das Federmittel (16) am Oberteil (14) angebracht ist.

7. Operationstisch (100) nach einem der Ansprüche 5 oder 6, wobei das Oberteil (14) einen Rahmen (14) umfasst und wobei das Druckstück (15) eine Zunge umfasst, welche einstückig mit dem Rahmen (14) ausgebildet ist und welche innerhalb einer vom Rahmen (14) umgebenen Öffnung liegt.

8. Operationstisch (100) nach einem der Ansprüche 1 bis 7, wobei der Schleifer (7) eine Gesamthöhe in einer Richtung senkrecht zu einer Ebene der Sensorfolie (6) von weniger als 15 mm, bevorzugt von maximal 10,6 mm aufweist.

9. Operationstisch (100) nach einem der vorherigen Ansprüche, ferner umfassend ein Steuergerät (107) zum Steuern der Bewegung der wenigstens einen zweiten Komponente (2) relativ zur ersten Komponente (1), wobei die Vorrichtung (5) zur Positionserfassung ein Positionssignal an das Steuergerät (107) ausgibt.

10. Operationstisch (100) nach einem der Ansprüche 1 bis 9, wobei die Sensorfolie (6) an der ersten Komponente (1) angebracht ist und der Schleifer (7) an der zweiten, gegenüber der ersten Komponente (1) beweglichen Komponente (2) angebracht ist.

11. Operationstisch (100) nach einem der Ansprüche 1 bis 9, wobei die Vorrichtung (5) an dem hydraulischen Verstellelement (4) angebracht ist.

12. Operationstisch (100) nach Anspruch 11, wobei die Sensorfolie (6) an einem ersten Bauteil des hydraulischen Verstellelements (4) angebracht ist und wobei der Schleifer (7) an einem zweiten Bauteil des hydraulischen Verstellelements (4) angebracht ist.

## Claims

1. An operating table (100) comprising:
a support surface having a first component (1), and at least one second component (2) that is movable relative to the first component (1),
at least one hydraulic adjustment element (4) for moving the second component relative to the first component, and
at least one device (5) for position detection which is designed to determine the position of the second component relative to the first component,
wherein the device includes the following:
a multilayer sensor film (6);
a slider (7) having a pressure piece (15) that elastically compresses the multilayer sensor film (6); and
an electrical circuit that generates a signal in accordance with the position of the pressure piece (15) on the sensor film (6).

2. The operating table (100) according to Claim 1, wherein the electrical circuit includes a potentiometer circuit.

3. The operating table (100) according to Claim 1 or 2, wherein the multilayer sensor film (6) has an upper layer and a lower layer (18, 19), each provided with electrically conductive coatings, and wherein an elastically compressible intermediate layer is situated between the upper layer and the lower layer (18, 19).

4. The operating table (100) according to Claim 3, wherein a spring means (16) is provided for elastically pressing the pressure piece (15) of the slider (7) against the sensor film (6), as the result of which the intermediate layer is elastically compressed, and the electrically conductive coatings of the upper layer and lower layer (18, 19) are brought into electrical contact with one another at the position of the pressure piece (15).

5. The operating table (100) according to Claim 4, wherein the slider (7) includes a lower part (12) and an upper part (14) respectively situated at opposite sides of the sensor film (6),
wherein the upper part (14) is fastened to the lower part (12), and has outlet openings (17) for the sensor film (6) on opposite sides.

6. The operating table (100) according to Claim 5, wherein the spring means (16) is mounted on the upper part (14).

7. The operating table (100) according to one of Claims 5 or 6, wherein the upper part (14) includes a frame (14), and wherein the pressure piece (15) includes a tongue that is integrally formed with the frame (14) and situated within an opening that is surrounded by the frame (14).

8. The operating table (100) according to one of Claims 1 to 7, wherein the overall height of the slider (7) in a direction perpendicular to a plane of the sensor film (6) is less than 15 mm, preferably 10.6 mm maximum.

9. The operating table (100) according to one of the preceding claims, further comprising a control unit (107) for controlling the movement of the at least one second component (2) relative to the first component (1), wherein the device (5) outputs a position signal to the control unit (107) for position detection.

10. The operating table (100) according to one of Claims 1 to 9, wherein the sensor film (6) is mounted on the first component (1), and the slider (7) is mounted on the second component (2) which is movable relative to the first component (1).

11. The operating table (100) according to one of Claims 1 to 9, wherein the device (5) is mounted on the hydraulic adjustment element (4).

12. The operating table (100) according to Claim 11, wherein the sensor film (6) is mounted on a first part of the hydraulic adjustment element (4), and wherein the slider (7) is mounted on a second part of the hydraulic adjustment element (4).

## Revendications

1. Table d'opération (100), comprenant :
une surface de support avec un premier composant (1) et au moins un deuxième composant (2) mobile par rapport au premier composant,
au moins un élément de réglage hydraulique (4) pour déplacer le deuxième composant par rapport au premier, et
au moins un dispositif (5) de détection de position, conçu pour déterminer la position du deuxième composant par rapport au premier,
le dispositif comprenant :
une feuille à capteur multicouche (6) ;
un frotteur (7) présentant une pièce de pression (15) comprimant de manière élastique la feuille à capteur multicouche (6) ; et
un circuit électrique générant un signal en fonction de la position de la pièce de pression (15) sur la feuille à capteur (6).

2. Table d'opération (100) selon la revendication 1, dans laquelle le circuit électrique comprend un potentiomètre.

3. Table d'opération (100) selon la revendication 1 ou 2, dans laquelle la feuille à capteur multicouche (6) présente une couche supérieure et une couche inférieure (18, 19) respectivement munies de revêtements électroconducteurs, et dans laquelle une couche intermédiaire compressible de manière élastique est disposée entre les couches supérieure et inférieure (18, 19).

4. Table d'opération (100) selon la revendication 3, dans laquelle un moyen formant ressort (16) est prévu pour presser la pièce de pression (15) du frotteur (7) de manière élastique contre la feuille à capteur (6) de sorte que la couche intermédiaire est comprimée de manière élastique, et dans la position de la pièce de pression (15), les revêtements électroconducteurs des couches supérieure et inférieure (18, 19) sont mis en contact électrique l'un avec l'autre.

5. Table d'opération (100) selon la revendication 4, dans laquelle le frotteur (7) comprend une partie inférieure (12) et une partie supérieure (14) disposées respectivement sur le côté opposé de la feuille à capteur (6),
la partie supérieure (14) étant fixée à la partie inférieure (12) et présentant sur des côtés opposés des ouvertures de passage (17) pour la feuille à capteur (6).

6. Table d'opération (100) selon la revendication 5, dans laquelle le moyen formant ressort (16) est attaché à la partie supérieure (14).

7. Table d'opération (100) selon l'une quelconque des revendications 5 ou 6, dans laquelle la partie supérieure (14) comprend un cadre (14) et la pièce de pression (15) présente une lame réalisée d'une seule pièce avec le cadre (14) et située à l'intérieur d'une ouverture entourée par le cadre (14).

8. Table d'opération (100) selon l'une quelconque des revendications 1 à 7, dans laquelle le frotteur (7) présente une hauteur totale dans une direction perpendiculaire à un plan de la feuille à capteur (6) inférieure à 15 mm, de préférence de 10,6 mm au maximum.

9. Table d'opération (100) selon l'une quelconque des revendications précédentes, comprenant en outre un contrôleur (107) pour commander le déplacement dudit au moins un deuxième composant (2) par rapport au premier composant (1), le dispositif (5) délivrant au contrôleur (107) un signal de position pour détecter la position.

10. Table d'opération (100) selon l'une quelconque des revendications 1 à 9, dans laquelle la feuille à capteur (6) est attachée au premier composant (1) et le frotteur (7) est attaché au deuxième composant (2) mobile par rapport au premier composant (1).

11. Table d'opération (100) selon l'une quelconque des revendications 1 à 9, dans laquelle le dispositif (5) est attaché à l'élément de réglage hydraulique (4).

12. Table d'opération (100) selon la revendication 11, dans laquelle la feuille à capteur (6) est attachée à un premier élément constitutif de l'élément de réglage hydraulique (4) et le frotteur (7) est attaché à un deuxième élément constitutif de l'élément de réglage hydraulique (4).
